# EUROPÄISCHE PATENTSCHRIFT

(11) **EP 1 604 196 B1**
(45) Veröffentlichungstag und Bekanntmachung des Hinweises auf die Patenterteilung: **10.11.2010**
(21) Anmeldenummer: 04721426.7
(22) Anmeldetag: 18.03.2004
(51) Int. Cl.: G01N 27/00

(54) **VERFAHREN UND VORRICHTUNG ZUR BESTIMMUNG DES REDOXZUSTANDES EINER MIT EINEM KATALYSATORMATERIAL BESCHICHTETEN REAKTIONSOBERFLÄCHE**
METHOD AND DEVICE FOR DETERMINING THE REDOX STATE OF A REACTION SURFACE COATED WITH A CATALYST MATERIAL
PROCEDE ET DISPOSITIF POUR DETERMINER L'ETAT REDOX D'UNE SURFACE REACTIONNELLE REVETUE D'UN MATERIAU CATALYSEUR

(30) Priorität: 20.03.2003 AT 4492003
(43) Veröffentlichungstag der Anmeldung: 14.12.2005
(73) Patentinhaber: AVL List GmbH, 8020 Graz (AT)
(72) Erfinder: THANNER, Herbert, A-8020 Graz (AT)
(74) Vertreter: Babeluk, Michael
(86) Internationale Anmeldenummer: PCT/AT2004/000100
(87) Internationale Veröffentlichungsnummer: WO 2004/083838

(56) Entgegenhaltungen:
- EP-A- 1 143 241
- WO-A-00/66266
- GB-A- 1 049 742
- US-A- 3 879 992
- US-A- 5 827 947
- US-A- 6 083 637
- US-B1- 6 222 366
- US-B1- 6 455 181

## Beschreibung

Die Erfindung betrifft ein Verfahren und eine Vorrichtung zur Bestimmung des Redoxzustandes einer mit einem Katalysatormaterial beschichteten, oder aus einem Katalysatormaterial bestehenden Anode einer Hochtemperaturbrennstoffzelle oder einer Reaktionsoberfläche eines Reformers sowie eine piezoelektrische Sensoreinrichtung zur Bestimmung des Redoxzustandes einer oxidier-/reduzierbaren Beschichtung.

Hochtemperaturbrennstoffzellen wie beispielsweise die Festoxidbrennstoffzelle, oder die Schmelzkarbonatbrennstoffzelle müssen für den Betrieb an den Elektroden mit Gasen versorgt werden, d.h. dem Brenngas (H₂, CO oder CH₄) an der Anode und dem Oxidationsgas (O₂ oder Luft) an der Kathode. Die Gasräume müssen dabei gegeneinander abgedichtet sein. Eine unzureichende Dichtung führt zu einer Verringerung der Zellspannung und meist zur Degradation und dem Versagen der Brennstoffzelle.

Zusätzlich entsteht beispielsweise beim Übertritt von sauerstoff in einen H₂-reichen Anodenraum bei Temperaturen unterhalb von 600°C ein hochexplosives Gemisch.

Als Katalysatormaterial an der Anode wird beispielsweise Nickel (Ni) bzw. Nickel-Cermet verwendet, welches jedoch beim Kontakt mit sauerstoffhältiger Atmosphäre Nickeloxid (NiO) bildet, wodurch die katalytische Aktivität beeinträchtigt wird. Aus diesem Grund muss zur Inbetriebnahme einer Hochtemperaturbrennstoffzelle mit Ni bzw. Ni-Cermet als Anodenmaterial eine sogenannte Reduktionsphase durchlaufen werden, wobei der Anodenraum anfänglich beispielsweise mit Stickstoff gespült und anschließender schrittweiser Erhöhung der Konzentration des Brenngases (beispielsweise Wasserstoffgas), welches als Reduktionsmittel wirkt, durchströmt wird. Während dieser Reduktionsphase wird das NiO zu metallischem Ni reduziert. Umgekehrt ist in manchen Fällen, wie beispielsweise bei Wartungszwecken, eine Oxidation des Anodenmaterials nicht vermeidbar. Die Reduktion und Oxidation der Anode wird auch als "Redox-Cycle" bezeichnet.

Es ist bekannt derartige "Redox-Cycles" bzw. den Redoxzustand bei Ni/YsZ-Cermet Anoden (YsZ = Yttrium dotiertes Zirkonium) über deren Polarisationszustand, beispielsweise durch Impedanzspektroskopie, zu bestimmen. Diese Untersuchungsmethode wird insbesondere in der Entwicklung von Brennstoffzellen eingesetzt, wobei jedoch nur bei Einzelzellenexperimenten zuverlässig auf die katalytische Aktivität der Anode geschlossen werden kann. Für die laufende Überwachung während des Betriebes einer Hochtemperaturbrennstoffzelle eignet sich dieses Verfahren allerdings nicht.

Weiters sind aus "Kinetics of Oxidation and Reduction of Ni/YsZ Cermets", 5th European Solid Oxide Fuel Cell Forum, Vol. 1 (2002), pp. 467-474, der Autoren Daniel Fouquet, Axel C. Müller, André Weber und Ellen Ivers-Tiffée kinetische Untersuchungen zur Reduktion und Oxidation von NiO/Ni Pulver und NiO/Ni-YsZ Cermets mit Hilfe von TGA Messungen (Thermogravimetrische Analyse) bekannt geworden. Derartige Messungen können allerdings nicht zur laufenden Überwachung von Hochtemperaturbrennstoffzelle eingesetzt werden.

Reformer, beispielsweise Dampfreformer zur Erzeugung eines wasserstoffreichen Brenngases für Brennstoffzellen, weisen mit Katalysatormaterialien beschichtete Reaktionsoberflächen auf, an welchen beispielsweise aus den Primärmedien Erdgas und Wasserdampf ein Brenngas gewonnen wird, welches H₂ und CO enthält. Weiters werden Reformer eingesetzt, welche mit Methanol als Primärmedium arbeiten, und nach der Gleichung

CH₃OH + H₂O + Wärme → 3H₂ + CO₂

ein wasserstoffreiches Brenngas erzeugen. Als Katalysatormaterialien werden unterschiedliche Redoxschichten, beispielsweise Ni/NiO der Nickel-Cermet, eingesetzt. Der Wirkungsgrad sowie die Betriebssicherheit des Reformers ist vom Zustand der Reaktionsoberfläche abhängig.

Aus der US 6,455.181 B1 ist eine Brennstoffzellenanordnung bekannt, weiche einen Sensor mit einer Membranelektrode aufweist, denen eine Seite mit dem Gaszulauf zur Brennstoffzelle und deren andere Seite mit dem Abgas der Brennstoffzelle in Verbindung steht, wobei beide Seiten der Membranelektrode unterschiedliche Beschichtungen aufweisen. Die unterschiedliche Gaszusammensetzung an beiden Membranseiten, beispielsweise eine unterschiedliche Wasserstoffkonzentration, wird in ein elektrisches Signal umgewandelt, mit welchem Signal der Gasstrom der Brennstoffzelle reguliert werden kann. Es werden somit Unterschiede in der Gaskonzentration zwischen Eingang und Ausgang der Brennstoffzelle gemessen, die Vorrichtung ist allerdings nicht geeignet den Redoxzustand der Anode einer Hochtemperaturbrennstoffzelle bzw. den Redoxzustand der Reaktionsfläche eines Reformers zu bestimmen.

Aus der US 5,827,947 A ist ein Gassensor bekannt, mit welchem bestimmte Verunreinigungen in einem Fluidstrom gemessen werden können. Dazu ist ein piezoelektrischer Resonator mit einem inerten, porösen Material beschichtet, welches eine Metallverbindung enthält, die auf die zu bestimmenden Gaskomponente, beispielsweise mit einer Redoxreaktion, reagiert. Aus Änderungen des Frequenzverhaltes des Resonators wird auf die Konzentration der Verunreinigung geschlossen.

Aufgabe der Erfindung ist es daher, ein Verfahren bzw. eine Vorrichtung sowie eine Sensoreinrichtung zur Überwachung des Redoxzustandes der Anode einer Hochtemperaturbrennstoffzelle bzw. der katalytischen Reaktionsoberfläche eines Reformers vorzuschlagen, welche im laufenden Betrieb eingesetzt werden können, wobei weiters durch Regelung bzw. Steuerung mindestens eines Betriebsparameters ein optimierter und sicherer Betrieb einer Brennstoffzelle bzw. eines Brennstoffzellensystems samt Reformer gewährleistet sein soll,

Die Aufgabe wird erfindungsgemäß dadurch gelöst, dass zumindest ein erster Resonator einer piezoelektrischen Sensoreinrichtung mit dem H₂- und/oder CO- und/oder CH₄-hältigen Anodengasstrom der Hochtemperaturbrennstoffzelle in Kontakt gebracht wird, wobei die Oberfläche des ersten Resonators mit einer im Anodengasstrom oxidier-/reduzierbaren Beschichtung versehen ist, dass zumindest eine Änderung des Resonanzverhaltens, vorzugweise der Resonanzfrequenz, des ersten Resonators gemessen und davon auf den Redoxzustand der Anode der Hochtemperaturbrennstoffzelle geschlossen wird.

Für die Überwachung der Reaktionsoberfläche eines Reformers wird erfindungsgemäß zumindest ein erster Resonator einer piezoelektrischen Sensoreinrichtung mit dem H₂- und/oder CO- und/oder CH₄-hältigen Gasstrom des Reformers in Kontakt gebracht, wobei die Oberfläche des ersten Resonators mit einer im Gasstrom oxidier-/reduzierbaren Beschichtung versehen ist, und zumindest eine Änderung des Resonanzverhaltens, vorzugsweise der Resonanzfrequenz, des ersten Resonators gemessen und davon auf den Redoxzustand der Reaktionsfläche des Reformers geschlossen wird.

Eine erfindungsgemäße Vorrichtung zur Durchführung des Verfahrens ist dadurch gekennzeichnet, dass im Anodengasstrom der Hochtemperaturbrennstoffzelle bzw. im Gasstrom des Reformers, zumindest ein erster Resonator einer piezoelektrischen Sensorseinrichtung angeordnet ist, wobei der erste Resonator mit einer oxidier-/reduzierbaren Beschichtung versehen ist, sowie dass die Vorrichtung eine Einrichtung zur Messung zumindest einer Änderung des Resonanzverhaltens des ersten Resonators aufweist, wobei der erfasste Messwert ein Maß für den Redoxzustand der Anode der Hochtemperaturbrennstoffzelle, bzw. ein Maß für den Redoxzustand der Reaktionsoberfläche des Reformers ist.

Gemäß einer vorteilhaften Ausführungsvariante besteht die oxidier-/reduzierbare Beschichtung des ersten Resonators aus dem Katalysatormaterial der Anode der Hochtemperaturbrennstoffzelle oder dem Katalysatormaterial der Reaktionsfläche des Reformers.

Die freie Standard-Bildungsenergie für Oxide, welche von der Temperatur und vom Sauerstoffpartialdruck abhängt, ist aus dem sogenannten Ellingham Diagram für Oxide ablesbar, welches insbesondere bei der Gewinnung von Metallen aus Oxiden eine Rolle spielt. Beispiele für oxidier-/reduzierbare Beschichtungen des ersten Resonators (gegenüber CO- und/oder H₂- bzw. CH₄-hältigen Gasen) sind: Cu/CuO, Ni/NiO, Pb/PbO, Co/CoO, Ag/AgO, Pd/PdO sowie Nickel-Cermet.

Für Differenzmessungen ist erfindungsgemäß im Gasstrom zumindest ein zweiter Resonator der piezoelektrischen Sensoreinrichtung angeordnet, wobei der zweite Resonator eine im Gasstrom chemisch stabile Beschichtung aufweist. Dabei wird die Differenzfrequenz zwischen dem ersten und zweiten Resonator der Sensoreinrichtung als Maß für den Redoxzustand der reduzier-/oxidierbaren Schicht herangezogen. Beispiele für chemisch stabile Beschichtungen (gegenüber CO- und/oder H₂- bzw. CH₄-hältigen Gasen) sind: CaO, MgO, Al₂O₃, TiO₂, SiO₂, MnO, V/VO, Cr/CrO, sowie Edelmetalle.

Erfindungsgemäß ist vorgesehen, dass in Abhängigkeit der gemessenen Änderung des Resonanzverhaltens, vorzugsweise in Abhängigkeit der Resonanzfrequenz, zumindest ein Betriebsparameter der Hochtemperaturbrennstoffzelle oder des Reformers gesteuert bzw. geregelt wird.

Weitere Betriebsparameter können erfindungsgemäß dadurch gewonnen werden, dass die Resonanzfrequenz bzw. der Resonanzwiderstand eines der beiden Resonatoren, vorzugsweise jenes Resonators mit der chemisch stabilen Beschichtung, gemessen und als Maß für die Temperatur bzw. den Druck im Gasstrom verwendet wird. Aus den am Messort gewonnen Daten über Druck, Temperatur und Redoxzustand kann z.B. mit Hilfe der Druck- und Temperaturdaten im Anodenraum einer Brennstoffzelle der Redoxzustand der Anode ermittelt werden. Beispielsweise kann mit der erfindungsgemäßen Vorrichtung die Brenngaszufuhr bzw. Brenngaszusammensetzung zur Anode und/oder die Temperatur während der Startphase und/oder einer Stopphase gesteuert bzw. geregelt werden.

Eine erfindungsgemäße piezoelektrische Sensoreinrichtung zur Bestimmung des Redoxzustandes einer oxidier-/reduzierbaren Beschichtung, zeichnet sich dadurch aus, dass die oxidier-/reduzierbare Beschichtung auf der Oberfläche zumindest eines ersten Resonators der Sensoreinrichtung aufgetragen ist, wobei die Resonatoroberfläche in Strömungsverbindung mit dem Anodengasraum einer Hochtemperaturbrennstoffzelle oder dem Gasraum eines Reformers bringbar ist. Bevorzugt ist auf der Oberfläche zumindest eines zweiten Resonators der Sensoreinrichtung eine chemisch stabile Beschichtung aufgetragen, welche im Gasstrom der Hochtemperaturbrennstoffzelle oder des Reformers kein Redoxverhalten zeigt. Die beiden Resonatoren können bevorzugt als BAW- oder SAW-Resonatoren ausgeführt sein.

Eine bevorzugte erfindungsgemäße Anwendung des piezoelektrischer Sensor besteht beispielsweise darin, einen Sauerstoffübertritt, insbesondere während der kritischen Startphase (z.B. aus dem Kathodenkreis), in den Anodenkreis zu erkennen, wodurch die Einleitung einer Ausschalt- oder Notstop-Prozedur für das Brennstoffzellensystem erfolgen kann.

Die piezoelektrische Sensoreinrichtung kann eingangsseitig oder auch an der Austrittsseite des Anodengasstroms der Brennstoffzelle angeordnet sein. Die am Austritt der Brennstoffzelle auftretende Gaszusammensetzung bei Normalbetrieb der Brennstoffzelle (z.B.: CH₄, H₂, CO, CO₂, N₂ und H₂O) ist temperatur- und lastabhängig.

Gemäß einer Ausführungsvariante kann die piezoelektrische Sensoreinrichtung auch im Anodengasraum der Hochtemperaturbrennstoffzelle oder an der Austrittsseite des Gasstroms aus dem Reformer angeordnet sein.

Die Erfindung wird im Folgenden anhand von schematischen Zeichnungen näher erläutert. Es zeigen:
- Fig. 1: eine schematische Darstellung einer erfindungsgemäßen Vorrich- tung zur Bestimmung des Redoxzustandes einer Anode einer Hochtemperaturbrennstoffzelle mit dem erfindungsgemäßen piezo- elektrische Sensor und
- Fig. 2: eine Ausführungsvariante der Vorrichtung nach Fig. 1 in einer Brennstoffzellenanordnung mit einem Dampfreformer.

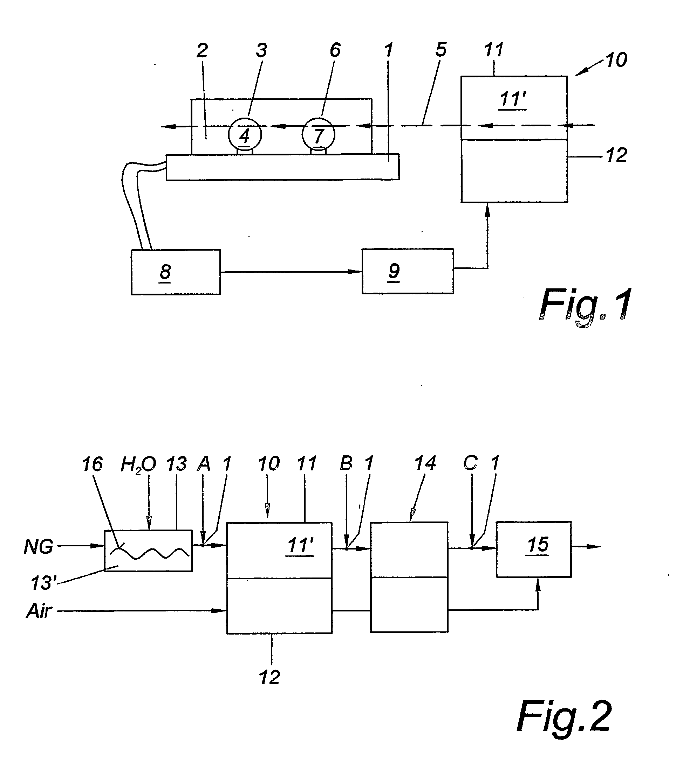

Die in der Fig. 1 dargestellte Vorrichtung zur Bestimmung des Redoxzustandes einer mit einem Katalysatormaterial beschichteten oder aus einem Katalysatormaterial bestehenden Anode 11 einer Hochtemperaturbrennstoffzelle 10 weist im H₂- und/oder CO- und/oder CH₄-hältigen Anodengasstrom 5 der Brennstoffzelle eine piezoelektrische Sensoreinrichtung 1 auf, dessen erster Resonator 3 mit einer im Anodengasstrom oxidier-/reduzierbaren Beschichtung 4 versehen ist. Die Oberfläche des Resonators steht dabei in Strömungsverbindung mit dem Anodengasraum 11' und ist im dargestellten Beispiel austrittsseitig der Hochtemperaturbrennstoffzelle 10 angeordnet. Die Kathode der Brennstoffzelle 10 ist mit 12 bezeichnet.

Die Sensoreinrichtung 1 weist einen zweiten Resonator 6 auf, dessen Oberfläche mit einer chemisch stabilen, inerten Beschichtung 7 versehen ist, welche im Anodengasstrom 5 der Hochtemperaturbrennstoffzelle 10 kein Redoxverhalten zeigt. Auf dem zweiten Resonator 6 kann z.B. ein Edelmetall oder eine inerte Oxidschicht aufgetragen sein. Die chemisch stabile Beschichtung 7 und die oxidier/reduzierbare Beschichtung 4 der Resonatoren 3 und 6 können - wie in Fig. 1 dargestellt - in zwei Bereichen eines piezoelektrischen Kristallelementes 2 angeordnet sein. Beide Resonatoren weisen dadurch die selben materialabhängigen Parameter auf, was die Signalauswertung wesentlich erleichtert.

Bei der Verwendung von SAW-Resonatoren kann die Resonatoranregung und die Signalabfrage bevorzugt über Funk erfolgen.

Bei einem als BAW-Resonator ausgeführten ersten Resonator 3 können dessen gegenüberliegenden Oberflächen jeweils mit einer oxidier-/reduzierbaren Beschichtung 4 versehen sein, wodurch bei gleicher Massenbelegung eine Verdoppelung der Signalstärke erzielt werden kann.

Weiters ist es möglich, die Resonanzfrequenz oder den Resonanzwiderstand mit Hilfe des Resonators 6 mit der chemisch stabilen Beschichtung 7 zu messen und als Maß für die Temperatur oder den Druck im Anodengasstrom 5 zu verwenden.

Die Vorrichtung gemäß Fig. 1 weist eine Einrichtung 8 zur Messung zumindest einer Änderung des Resonanzverhaltens (beispielsweise der Resonanzfrequenz) der Resonatoren 3 und 6 der piezoelektrischen Sensoreinrichtung 1 auf, wobei der erfasste Messwert ein Maß für den Redoxzustand der Anode 11 der Hochtemperaturbrennstoffzelle 10 ist. Über eine Regeleinrichtung 9 können unterschiedliche Betriebsparameter der Hochtemperaturbrennstoffzelle 10 geregelt bzw. gesteuert werden.

In Fig. 2 ist schematisch eine Brennstoffzellenanordnung mit einer Brennstoffzelle 10 samt einem Dampfreformer 13 für den Erdgasbetrieb dargestellt. Der in Fig. 1 beschriebene piezoelektrische Sensor 1 kann im Anodengasstrom vor der Anode 11 der Brennstoffzelle 10 bzw. an der Austrittsseite des Gasstromes aus dem Reformer 13 (siehe Punkt A) angeordnet sein und über die erfassten Messdaten sowohl Auskunft über den Zustand der Anode 11 im Anodengasraum 11' der Brennstoffzelle 10 als auch über den Zustand der Reaktionsoberfläche 16 im Gasraum 13' des Reformers 13 geben. Weiters kann die Sensoreinrichtung 1 eintrittsseitig am Reformer 13 (z.B. in einer gemeinsamen Zuleitung für Erdgas und Wasserdampf), nach der Anode 11 (siehe Punkt B) oder auch nach einem optionalen Wärmetauscher 14 vor einem Nachverbrenner 15 (siehe Punkt C) angeordnet sein.

## Patentansprüche

1. Verfahren zur Bestimmung des Redoxzustandes einer Anode (11) einer Hochtemperaturbrennstoffzelle (10) oder einer Reaktionsfläche (16) eines Reformers (13), wobei die Anode (11) oder die Reaktionsfläche (16) mit einem Katalysatormaterial beschichtet ist, oder aus einem Katalysatormaterial besteht, **dadurch gekennzeichnet, dass** zumindest ein erster Resonator (3) einer piezoelektrischen Sensoreinrichtung (1) mit dem H₂- und/oder CO- und/oder CH₄-hältigen Anodengasstrom (5) der Hochtemperaturbrennstoffzelle (10) oder dem H₂- und/oder CO- und/oder CH₄-hältigen Gasstrom des Reformers (13) in Kontakt gebracht wird, wobei die Oberfläche des ersten Resonators (3) mit einer im Anodengasstrom oder im Gasstrom des Reformers (13) oxidier-/reduzierbaren Beschichtung (4) versehen ist, dass zumindest eine Änderung des Resonanzverhaltens, vorzugsweise eine Änderung der Resonanzfrequenz, des ersten Resonators (3) gemessen und davon auf den Redoxzustand der Anode (11) der Hochtemperaturbrennstoffzelle (10) oder auf den Redoxzustand der Reaktionsfläche (16) des Reformers (13) geschlossen wird.

2. Verfahren nach Anspruch 1, **dadurch gekennzeichnet, dass** in Abhängigkeit der gemessenen Änderung des Resonanzverhaltens, vorzugsweise in Abhängigkeit der Resonanzfrequenz, ein Betriebsparameter der Hochtemperaturbrennstoffzelle (10) oder des Reformers (13) gesteuert bzw. geregelt wird.

3. Verfahren nach Anspruch 1 oder 2, **dadurch gekennzeichnet, dass** zumindest ein zweiter Resonator (6) der piezoelektrischen Sensoreinrichtung (1) mit dem H₂- und/oder CO- und/oder CH₄-hältigen Gasstrom in Kontakt gebracht wird, welcher mit einer chemisch stabilen Beschichtung (7) versehen ist, sowie dass die Differenzfrequenz zwischen dem ersten (3) und zweiten Resonator (6) der Sensoreinrichtung (1) als Maß für den Redoxzustand Anode (11) der Hochtemperaturbrennstoffzelle (10) oder der Reaktionsfläche (16) des Reformers (13) herangezogen wird.

4. Verfahren nach Anspruch 3, **dadurch gekennzeichnet, dass** die Resonanzfrequenz eines der beiden Resonatoren (3, 6), vorzugsweise jenes Resonators (6) mit der chemisch stabilen Beschichtung (7), gemessen und als Maß für die Temperatur im Gasstrom verwendet wird.

5. Verfahren nach Anspruch 3, **dadurch gekennzeichnet, dass** der Resonanzwiderstand eines der beiden Resonatoren (3, 6), vorzugsweise jenes Resonators (6) mit der chemisch stabilen Beschichtung, gemessen und als Maß für den Druck im Gasstrom verwendet wird.

6. Vorrichtung mit einer Anode (11) einer Hochtemperaturbrennstoffzelle (10) oder einer Reaktionsoberfläche (16) eines Reformers (13), wobei die Anode (11) oder die Reaktionsfläche (16) mit einem Katalysatormaterial beschichtet ist oder aus einem Katalysatormaterial besteht, **gekennzeichnet durch** eine piezoelektrische Sensorseinrichtung (1) mit zumindest einem ersten Resonator (3), der im Anodengasstrom (5) der Hochtemperaturbrennstoffzelle (10) oder im Gasstrom (5) des Reformers (13) angeordnet ist, wobei der erste Resonator (3) mit einer oxidier/reduzierbaren Beschichtung (4) versehen ist, sowie einer Einrichtung (8) zur Messung zumindest einer Änderung des Resonanzverhaltens des ersten Resonators (3), sodass der erfasste Messwert ein Maß für den Redoxzustand der Anode (11) der Hochtemperaturbrennstoffzelle (10) oder ein Maß für den Redoxzustand der Reaktionsoberfläche (16) des Reformers (13) ist.

7. Vorrichtung nach Anspruch 6, **dadurch gekennzeichnet, dass** die oxidier-/reduzierbare Beschichtung (4) des ersten Resonators (3) aus dem Katalysatormaterial der Anode (11) der Hochtemperaturbrennstoffzelle (1) oder dem Katalysatormaterial der Reaktionsfläche (16) des Reformers (13) besteht.

8. Vorrichtung nach Anspruch 6 oder 7, **dadurch gekennzeichnet, dass** die oxidier-/reduzierbare Beschichtung (4) des ersten Resonators (3) aus Nickel-Cermet, Ni/NiO, Cu/CuO, Pb/PbO, Co/CoO Ag/AgO oder Pd/PdO besteht.

9. Vorrichtung nach einem der Ansprüche 6 bis 8, **dadurch gekennzeichnet, dass** die piezoelektrische Sensoreinrichtung (1) zumindest einen zweiten Resonator (6) aufweist, der im Gasstrom (5) der Hochtemperaturbrennstoffzelle (10) oder im Gasstrom des Reformers (13) angeordnet ist, wobei der zweite Resonator (6) eine im Gasstrom (5) chemisch stabile Beschichtung (7) aufweist.

10. Vorrichtung nach Anspruch 9, **dadurch gekennzeichnet, dass** die chemisch stabile Beschichtung (7) des zweiten Resonators (6) ein Edelmetall oder eine Oxidschicht, beispielsweise SiO₂, TiO₂, Al₂O₃, CaO, MgO oder MnO ist.

11. Vorrichtung nach Anspruch 6, **dadurch gekennzeichnet, dass** die piezoelektrische Sensoreinrichtung (1) im Anodengasraum (11') der Hochtemperaturbrennstoffzelle (10) oder an der Austrittsseite des Anodengasstroms (5) angeordnet ist.

12. Vorrichtung nach Anspruch 6, **dadurch gekennzeichnet, dass** die piezoelektrische Sensoreinrichtung (1) an der Eintritts- oder Austrittsseite des Gasstroms in den bzw. aus dem Reformer (13) angeordnet ist.

13. Vorrichtung nach einem der Ansprüche 9 bis 12, **dadurch gekennzeichnet, dass** die chemisch stabile Beschichtung (7) und die oxidier-/reduzierbare Beschichtung (4) auf zwei Bereichen eines piezoelektrischen Kristallelementes (2) aufgetragen sind.

14. Vorrichtung nach einem der Ansprüche 9 bis 13, **dadurch gekennzeichnet, dass** die beiden Resonatoren (3, 6) als BAW- oder SAW-Resonatoren ausgeführt sind.

15. Vorrichtung nach einem der Ansprüche 9 bis 13, **dadurch gekennzeichnet, dass** der erste Resonator (3) als BAW-Resonator ausgeführt ist und an den gegenüberliegenden Oberflächen jeweils oxidier-/reduzierbare Beschichtungen (4) aufweist.

## Claims

1. Method for determining the redox state of an anode (11) of a high-temperature fuel cell (10) or of the reaction surface (16) of a reformer (13), where the anode (11) or the reaction surface (16) is coated with or made from catalyst material, **characterised in that** at least a first resonator (3) of a piezoelectric sensor device (1) is brought into contact with the anode gas flow (5) containing H₂ and/or CO and/or CH₄ of the high-temperature fuel cell (10), or with the gas flow containing H₂ and/or CO and/or CH₄ of the reformer (13), where the surface of the first resonator (3) is furnished with a coating (4) which can be oxidized/ reduced in the anode gas flow or in the gas flow of the reformer (13), and that at least one change in the resonance properties, preferably a change in resonance frequency of the first resonator (3) is measured and the redox state of the anode (11) of the high-temperature fuel cell (10) or the redox state of the reaction surface (16) of the reformer (13) is inferred from this measurement.

2. Method according to claim 1, **characterised in that**, depending on the measured change of resonance properties, and preferably depending on the change in resonance frequency, at least one operational parameter of the high-temperature fuel cell (10) or the reformer (13) is controlled or adjusted.

3. Method according to any of claims 1 or 2, **characterised in that** at least one second resonator (6) of the piezo-electric sensor device (1) is brought into contact with the gas flow containing H₂ and/or CO and/or CH₄, said second resonator having a coating (7) which is chemically stable, and that the frequency difference between the first (3) and second resonator (6) of the sensor device (1) is used as a measure for the redox state of the anode (11) of the high-temperature fuel cell (10) or the reaction surface (16) of the reformer (13).

4. Method according to claim 3, **characterised in that** the resonance frequency of one of the two resonators (3, 6), and preferably that of the resonator (6) with the chemically stable coating (7), is measured and the measured value is used as a measure for the temperature in the gas flow.

5. Method according to claim 3, **characterised in that** the resonance resistance of one of the two resonators (3, 6), and preferably that of the resonator (6) with the chemically stable coating, is measured and the measured value is used as a measure for the pressure in the gas flow.

6. Device with an anode (11) of a high-temperature fuel cell (10) or a reaction surface (16) of a reformer (13), the anode (11) or the reaction surface (16) being coated with or made from catalyst material, **characterised in that** a piezoelectric sensor device (1) with at least one first resonator (3) is positioned in the anode gas flow (5) of the high-temperature fuel cell (10) or in the gas flow (5) of the reformer (13), said first resonator (3) being provided with an oxidizable/reducible coating (4), and that there is provided a unit (8) for measuring at least one change of the resonance properties of said first resonator (3), such that the measured value is a measure for the redox state of the anode (11) of the high-temperature fuel cell (10) or a measure for the redox state of the reaction surface (16) of the reformer (13).

7. Device according to claim 6, **characterised in that** the oxidizable/ reducible coating (4) of the first resonator (3) is made from the catalyst material of the anode (11) of the high-temperature fuel cell (10) or the catalyst material of the reaction surface (16) of the reformer (13).

8. Device according to any of claims 6 or 7, **characterised in that** the oxidizable/reducible coating (4) of the first resonator (3) is made from nickel-cermet, Ni/NiO, Cu/CuO, Pb/PbO, Co/CoO, Ag/AgO, or Pd/PdO.

9. Device according to any of claims 6 to 8, **characterised in that** the piezoelectric sensor device (1) has at least one second resonator (6), which is placed in the gas flow (5) of the high-temperature fuel cell (10) or in the gas flow of the reformer (13), said second resonator (6) having a coating (7) which is chemically stable in the gas flow (5).

10. Device according to claim 9, **characterised in that** the chemically stable coating (7) of the second resonator (6) is a noble metal or an oxide layer, such as SiO₂, TiO₂, Al₂O₃, CaO, MgO, or MnO.

11. Device according to claim 6, **characterised in that** the piezoelectric sensor device (1) is placed in the anode gas chamber (11') of the high-temperature fuel cell (10) or on the outlet side of the anode gas flow (5).

12. Device according to claim 6, **characterised in that** the piezoelectric sensor device (1) is placed on the inlet or outlet side of the gas flow into or from the reformer (13).

13. Device according to any of claims 9 to 12, **characterised in that** the chemically stable coating (7) and the oxidizable/reducible coating (4) are applied on two areas of a piezoelectric crystal element (2).

14. Device according to any of claims 9 to 13, **characterised in that** the two resonators (3, 6) are configured as BAW- or SAW-resonators.

15. Device according to any of claims 9 to 13, **characterised in that** the first resonator (3) is configured as a BAW-resonator having oxidizable/reducible coatings (4) on opposite surfaces.

## Revendications

1. Procédé pour déterminer l'état Redox d'une anode (11) de pile à combustible à haute température (10) ou d'une surface réactionnelle (16) d'un réformeur (13) ;
l'anode (11) ou la surface réactionnelle (16) étant revêtue d'un matériau catalyseur ou réalisée en un matériau catalyseur,
**caractérisé en ce que**
- On met en contact au moins un premier résonateur (3) d'une installation de capteur piézoélectrique (1) avec un flux de gaz anodique (5) contenant H₂, CO et/ou CH₄ de la pile à combustible à haute température (10) ou un flux gazeux du réformeur (13) contenant H₂ et/ou CO et/ou CH₄
- On munit la surface du premier résonateur (3) d'un revêtement (4) susceptible d'être oxydé/réduit, par le flux de gaz anodique ou le flux de gaz du réformeur (13),
- on mesure au moins une variation du comportement de résonant de préférence une variation de la fréquence de résonance du premier résonateur (3) et à partir de là on conclut à l'état Redox de l'anode (11) de la pile à combustible à haute température (10) ou de l'état Redox de la surface réactionnelle (16) du réformeur (13).

2. Procédé selon la revendication 1,
**caractérisé en ce qu'**
en fonction de la variation mesurée du comportement de résonance, de préférence en fonction de la fréquence de résonance, on commande ou on régule un paramètre de fonctionnement de la pile à combustible à haute température (10) ou du réformeur (13)

3. Procédé selon la revendication 1 ou 2,
**caractérisé en ce qu'**
on met au moins un second résonateur (6) de l'installation de capteurs piézoélectriques (1) en contact avec un flux gazeux contenant H₂ et/ ou CO et/ou CH₄, ce résonateur étant muni d'un revêtement chimiquement stable (7) et
on utilise la différence de fréquence entre le premier résonateur (3) et le second résonateur (6) de l'installation de capteur (1) comme mesure de l'état Redox de l'anode (11) de la pile à combustible à haute température (10) ou de la surface réactionnelle (16) du réformeurs (13).

4. Procédé selon la revendication 3,
**caractérisé en ce que**
l'on mesure la fréquence de résonance de l'un des deux résonateurs (3, 6) de préférence du résonateur (6) muni d'un revêtement chimiquement stable (7) et on l'utilise comme mesure de la température du flux gazeux.

5. Procédé selon la revendication 3,
**caractérisé en ce que**
on mesure la résistance de résonance de l'un des deux résonateurs (3, 6) de préférence du résonateur (6) muni du revêtement chimiquement stable et on l'utilise comme mesure de la pression dans le flux gazeux.

6. Dispositif comportant une anode (11) d'une pile à combustible à haute température (10) d'une surface de résonateur (16) d'un réformeur (13), dans lequel l'anode (11) ou la surface réactionnelle (16) sont revêtues d'une matière de catalyseur ou sont réalisées en une matière de catalyseur,
**caractérisé par**
une installation de capteur piézoélectriques (1) comportant au moins un premier résonateur (3) installée dans le flux de gaz anodique (5) de la pile à combustible à haute température (10) ou dans le flux de gaz (5) du réformeur (13),
* le premier résonateur (3) étant muni d'un revêtement oxydant/réducteur (4) et
* une installation(8) pour mesurer au moins une variation du comportement de premier résonateur (3) de sorte que la valeur de mesure est une mesure de l'état Redox de l'anode (11) de la pile à combustible à haute température (10) ou constitue une mesure de l'état Redox de la surface réactionnelle (16) du réformeur (13).

7. Dispositif selon la revendication 6,
**caractérisé en ce que**
le revêtement oxydant/réducteur (4) du premier résonateur (3) est réalisé en une matière de catalyseur de l'anode (11) de la pile à combustible à haute température (1) ou de la matière de catalyseur de la surface réactionnelle (16) du réformeur (13).

8. Dispositif selon la revendication 6 ou 7,
**caractérisé en ce que**
le revêtement oxydant/réducteur (4) du premier résonateur (3) est en un nickel-cermet, Ni/NiO, Cu/CuO, Pb/PbO, Co/CoO, Ag/AGO ou Pd/PdO.

9. Dispositif selon l'une des revendications 6 à 8,
**caractérisé en ce que**
l'installation de capteur piézoélectrique (1) comporte au moins un second résonateur (6) installé dans le flux gazeux (5) de la pile à combustible à haute température (10) ou dans le flux gazeux du réformeur (13), le second résonateur (6) ayant un revêtement (7) chimiquement stable vis-à-vis du flux gazeux (5).

10. Dispositif selon la revendication 9,
**caractérisé en ce que**
le revêtement chimiquement stable (7) du second résonateur (6) est un métal noble ou une couche d'oxyde par exemple SiO₂, TiO₂, Al₂O₃, CaO, MgO ou MnO.

11. Dispositif selon la revendication 6,
**caractérisé en ce que**
l'installation de capteur piézoélectrique (1) est logée dans la chambre de gaz d'anode (11') de la pile à combustible à haute température (10) ou du côté de la sortie du flux de gaz anodique (5).

12. Dispositif selon la revendication 6,
**caractérisé en ce que**
l'installation de capteur piézoélectrique (1) est logée du côté de l'entrée ou du côté de la sortie du flux gazeux dans le réformeur (13) ou en sortie de celui-ci.

13. Dispositif selon l'une des revendications 9 à 12,
**caractérisé en ce que**
le revêtement chimiquement stable (7) et le revêtement oxydant/réducteur (4) sont appliqués sur deux zones d'un élément de cristal piézoélectrique (2).

14. Dispositif selon l'une des revendications 9 à 13,
**caractérisé en ce que**
les deux résonateurs (3,6) sont des résonateurs BAW ou SAW.

15. Dispositif selon l'une des revendications 9 à 13,
**caractérisé en ce que**
le premier résonateur (3) est un résonateur BAW et il comporte sur ses surfaces opposées, des revêtements (4) respectivement oxydant/ réducteur.
